# EUROPÄISCHE PATENTSCHRIFT

(11) **EP 1 537 305 B1**
(45) Veröffentlichungstag und Bekanntmachung des Hinweises auf die Patenterteilung: **30.08.2006**
(21) Anmeldenummer: 03794802.3
(22) Anmeldetag: 02.09.2003
(51) Int. Cl.: F01N 3/20, B01D 53/94, F01N 3/08, F01N 3/28

(54) **ABGASNACHBEHANDLUNGSANORDNUNG UND VERFAHREN HIERZU**
EXHAUST GAS POST-TREATMENT ARRANGEMENT AND METHOD THEREFOR
SYSTEME DE RETRAITEMENT DE GAZ D'ECHAPPEMENT ET PROCEDE CORRESPONDANT

(30) Priorität: 05.09.2002 DE 10241065
(43) Veröffentlichungstag der Anmeldung: 08.06.2005
(73) Patentinhaber: ROBERT BOSCH GMBH, 70442 Stuttgart (DE)
(72) Erfinder: ORLANDINI, Igor, 70329 Stuttgart (DE)
(86) Internationale Anmeldenummer: PCT/DE2003/002903
(87) Internationale Veröffentlichungsnummer: WO 2004/025092

(56) Entgegenhaltungen:
- EP-A- 0 629 771
- DE-A- 10 020 555
- US-B1- 6 176 078
- US-B1- 6 293 096
- PATENT ABSTRACTS OF JAPAN vol. 017, no. 633 (M-1513), 24. November 1993 (1993-11-24) & JP 05 195756 A (HINO MOTORS LTD), 3. August 1993 (1993-08-03)

## Beschreibung

### Stand der Technik

Die Erfindung geht aus von einer Abgasnachbehandlungsanordnung nach der Gattung des Hauptanspruchs.

Aus der DE 198 26 831 ist schon eine derartige Anordnung bekannt, bei der jedoch Abgas stets über einem Plasmareaktor strömen muss, um zu einem Entstickungskatalysator zu gelangen.

Die EP 1 055 806 beschreibt die Parallelschaltung zweier identischer Einrichtungen zur Beseitigung von Stickoxiden, die wahlweise mit Abgas beaufschlagt werden können.

### Vorteile der Erfindung

Die erfindungsgemäße Abgasnachbehandlungsanordnung bzw. das erfindungsgemäße Verfahren mit den kennzeichnenden Merkmalen der unabhängigen Ansprüche haben demgegenüber den Vorteil einer erhöhten Flexibilität hinsichtlich der zunächst erforderlichen Oxidation der Stickoxide im Abgas, um eine ausreichend hohe Stickoxidreduktion in der nachgeschalteten Einrichtung zur Beseitigung von Stickoxiden, beispielsweise einem Entstickungskatalysator, insbesondere einem Speicherkatalysator, gewährleisten zu können. Hierbei ist es insbesondere möglich, für verschiedene Temperaturbereiche des Abgases unterschiedliche Oxidationspfade zu wählen, um beispielsweise bei Temperaturen unterhalb von 240°C, bei denen die Konversionsraten in einem Oxidationskatalysator sehr schlecht sind, trotzdem eine effiziente Stickoxidoxidation zu gewährleisten, indem eine zweite vom Abgas durchströmbare Einrichtung vorgesehen ist, die insbesondere bei diesem relativ niedrigen Temperaturen effizienter arbeitet. Dabei ist es besonders vorteilhaft, die zweite Einrichtung zu der Einrichtung zur Oxidation parallel zu schalten. Dadurch wird es möglich, die zweite Einrichtung nur dann vom Abgas durchströmen zu lassen, wenn sie auch betrieben wird, wodurch der Abgasgegendruck insgesamt minimiert wird. Dabei können für verschiedene Temperaturbereiche des Abgases unterschiedliche Oxidationspfade gewählt werden.

Durch die in den abhängigen Ansprüchen aufgeführten Maßnahmen sind vorteilhafte Weiterbildungen und Verbesserungen der in den unabhängigen Ansprüchen angegebenen Anordnung bzw. des angegebenen Verfahrens möglich.

Des Weiteren ist es vorteilhaft, eine Abgasweiche vorzusehen, wodurch zwei verschiedene Oxidationsverfahren kombiniert werden können, ohne den Abgasgegendruck zu erhöhen, wie es bei einem Hintereinanderschalten entsprechender Einrichtungen der Fall wäre. Insbesondere mittels einer elektrisch angesteuerten Abgasklappe wird es vorteilhafter Weise möglich, das jeweilige energetisch günstiger arbeitende Bauteil auszuwählen. Das Abgas durchströmt daher in einer bevorzugten Ausführungsform jeweils nur ein Bauteil, um zur Entstickungseinrichtung zu gelangen.

Des Weiteren ist es vorteilhaft, als zweite Einrichtung einen Plasmareaktor vorzusehen, weil eine Oxidation von Stickoxiden mittels einer Plasmaquelle bei Abgastemperaturen unterhalb von 240°C eine im Vergleich zur Verwendung eines Oxidationskatalysators effizientere Vorgehensweise mit vergleichsweise reduziertem Energieverbrauch darstellt. Strömt darüber hinaus das Abgas nur dann durch den Plasmareaktor, wenn der Reaktor eingeschaltet ist, verringert sich dadurch in vorteilhafter Weise die Gefahr des Verrußens der Elektroden des Plasmareaktors. Darüber hinaus wird durch eine temperaturgeregelte Umleitung des Abgases bei einem Plasmareaktor gewährleistet, dass das Abgas beispielsweise nur bei Temperaturen bis 240°C durch den Reaktor geleitet und damit eine Hochtemperaturbelastung der Elektroden des Reaktors vermieden wird.

Weitere Vorteileile ergeben sich durch die in den weiteren abhängigen Ansprüchen und in der Beschreibung genannte Merkmale.

### Zeichnung

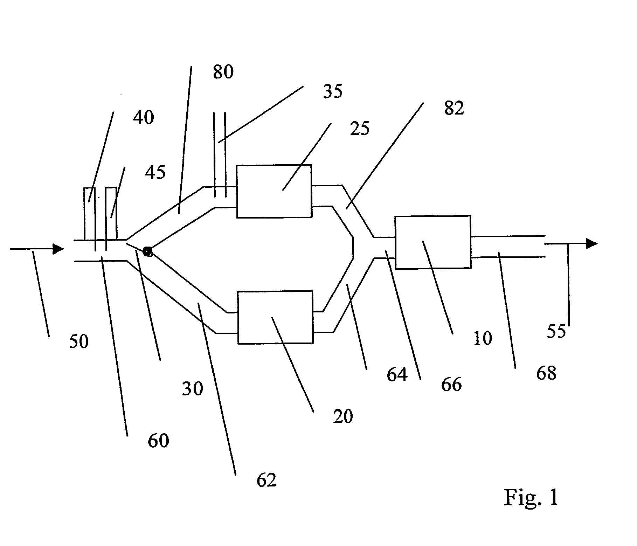

Ausführungsbeispiele der Erfindung sind in der Zeichnung dargestellt und in der nachfolgenden Beschreibung näher erläutert. Die Figur 1 zeigt hierbei eine Abgasnachbehandlungsanordnung mit einem Speicherkatalysator und zwei Einrichtungen zur Oxidation von Stickoxiden.

### Beschreibung der Ausführungsbeispiele

Die Anordnung nach Figur 1 weist einen Speicherkatalysator 10 auf, an dessen Ausgang eine Abgasausgangsleitung 68 zum Abtransport gereinigten Abgases 55 angeschlossen ist. Dem Speicherkatalysator 10 vorgelagert ist ein Oxidationskatalysator 20, wobei der Oxidationskatalysator 20 und der Speicherkatalysator 10 über eine Ausgangsleitung 64 des Oxidationskatalysators und einer mit ihr verbundenen Eingangsleitung 66 des Speicherkatalysators miteinander in Verbindung stehen. Der Eingang des Oxidationskatalysators 20 ist über eine Eingangsleitung 62 mit einer mit einer Brennkraftmaschine verbindbaren Abgasleitung 60 verbunden, so dass von der Brennkraftmaschine produziertes Abgas 50 über die Leitungen 60 und 62 zum Oxidationskatalysator 20 strömen kann. Des weiteren ist ein zum Oxidationskatalysator 20 parallel geschalteter Umgehungszweig vorgesehen, der durch die Abgasleitungen 80 bzw. 82 und eine zweite Einrichtung zur Oxidation, dem Plasmareaktor 25, gebildet ist. Hierbei zweigt die Eingangsleitung 80 zum Plasmareaktor von dem Verbindungsbereich der Abgasleitungen 50 und 62 ab und die Ausgangsleitung 82 vom Plasmareaktor vereinigt sich an der Verbindungsstelle der Abgasleitungen 64 und 66 mit der Abgasleitung 66. An der Verbindungsstelle der Eingangsleitung 80 des Plasmareaktors mit den Leitungen 60 bzw. 62 ist eine eine Abgasweiche bildende, elektrisch und/oder pneumatisch ansteuerbare Abgasklappe 30 vorgesehen. Im Bereich der Eingangsleitung 80 ist eine Kraftstoffzufuhreinrichtung 35 vorgesehen, die in die Abgasleitung hineinragt. Im Bereich der Abgasleitung 60 sind vor der Abgasweiche ein Stickoxidmesselement 40 sowie ein Temperaturmesselement 45 angeordnet.

Ein Steuergerät verarbeitet die Temperaturmesswerte des Temperaturmesselements 45. Bei Abgastemperaturen oberhalb von 240°C wird die Abgasklappe 30 durch das Steuergerät so angesteuert, dass das Abgas 50 ausschließlich über den Oxidationskatalysator 20 zum Speicherkatalysator 10 strömen kann. Bei Abgastemperaturen unterhalb von 240 °C wird dagegen die Abgasklappe 30 in die entgegengesetzte Stellung überführt, so dass das Abgas 50 nur über die als Plasmareaktor 25 ausgeführte zweite Oxidationseinrichtung zum Speicherkatalysator 10 strömen kann. In diesem Fall wird dann auch der Plasmareaktor zur Erzeugung eines Plasmas im Abgas aktiviert, d. h. elektrisch angesteuert. Die Leistung des Plasmareaktors zur Oxidation der Stickstoffmonoxide wird vom genannten Steuergerät in Abhängigkeit von der Konzentration von Stickoxiden im Abgas 50 eingestellt, die vom Stickoxidmesselement 40 erfasst wird. Stellt das Steuergerät fest, dass die Stickoxidkonzentration im Abgas 50 so hoch ist, dass sich ein ungünstiges Stickoxid : Kohlenwasserstoff - Verhältnis ergibt, veranlasst das Steuergerät über die Kraftstoffzufuhreinrichtung 35 eine dosierte Kraftstoffzufuhr in die Abgasleitung 80 vor dem Plasmareaktor 25. Beispielsweise in Betriebspunkten mit hohen Last- beziehungsweise Drehzahlwerten werden im Brennraum hohe Verbrennungstemperaturen erreicht, so daß infolge nahezu vollständiger Verbrennung weniger Kohlenwasserstoffe beziehungsweise mehr Stickoxide im Abgas enthalten sind. Dies wird dann durch eine entsprechende dosierte Kraftstoffzufuhr über die Kraftstoffzufuhreinrichtung 35 ausgeglichen, so daß ein effizienter plasmainduzierter Stickoxidabbau erfolgen kann, weil während der Oxidation der zugeführten Kohlenwasserstoffe sich Zwischenprodukte bilden können, die äußerst selektiv Stickstoffmonoxid in Stickstoffdioxid umwandeln.

In einer verbesserten Ausführungsform ist die Kraftstoffzufuhreinrichtung 35 derart angeordnet und ausgestaltet, daß der Kraftstoff gasförmig in den Plasmareaktor 25 gelangt. Dies wird insbesondere dadurch gewährleistet, dass ein Auslassventil der Kraftstoffzufuhreinrichtung unmittelbar vor dem Plasmareaktor angeordnet ist, so daß die Zudosierung des Kraftstoffs in den Plasmareaktor unmittelbar nach dem Eintritt des Kraftstoffs in den Abgastrakt erfolgen kann. In einer vereinfachten Ausführungsform kann auch auf eine Kraftstoffzufuhreinrichtung 35 bzw. auf einen entsprechenden Algorithmus im Steuergerät 40 verzichtet werden, der eine Kraftstoffzufuhr in den Abgastrakt regelt. Alternativ kann die Kraftstoffzufuhr in den Abgastrakt auch über die Brennkraftmaschine mittels einer Nacheinspritzung erfolgen. In einer weiteren Ausführungsvariante können auch Zwischenstellungen der Abgasklappe 30 vorgesehen sein, die in Abhängigkeit von der Abgastemperatur einen graduellen Übergang zwischen den beiden Oxidationspfaden ermöglichen. Ferner kann anstelle eines Speicherkatalysators auch ein Katalysator zur kohlenwasserstoffbasierten selektiven katalytischen Reduktion (HC-SCR-Katalysator) vorgesehen sein.

## Patentansprüche

1. Abgasnachbehandlungsanordnung mit einer Einrichtung zur Beseitigung von Stickoxiden aus dem Abgas einer Brennkraftmaschine und einer bezüglich der Strömungsrichtung des Abgases vorgelagerten Einrichtung zur Oxidation von Stickoxiden, wobei eine zweite vom Abgas durch strömbare Einrichtung (25) zur Oxidation von Stickoxiden vorgesehen ist, **dadurch gekennzeichnet, dass** die zweite Einrichtung ebenfalls der Einrichtung zur Beseitigung von Stickoxiden vorgelagert und zu der Einrichtung zur Oxidation derart parallelgeschaltet ist, dass für verschiedene Temperaturbereiche des Abgases unterschiedliche Oxidationspfade gewählt werden können.

2. Abgasnachbehandlungsanordnung nach Anspruch 1, **dadurch gekennzeichnet, dass** das von der Brennkraftmaschine kommende Abgas über eine Abgasweiche (30) wahlweise über die Einrichtung zur Oxidation (20) und/oder über die zweite Einrichtung (25) zur Oxidation geführt werden kann.

3. Abgasnachbehandlungsanordnung nach Anspruch 2, **dadurch gekennzeichnet, dass** die Abgasweiche eine schwenkbare Klappe, insbesondere eine elektrisch oder pneumatisch schwenkbare Klappe, aufweist.

4. Abgasnachbehandlungsanordnung nach einem der vorhergehenden Ansprüche, **dadurch gekennzeichnet**, die Ausgänge der Einrichtungen zur Oxidation über Abgasleitungen (64, 82) mit einer zur Einrichtung zur Beseitigung von Stickoxiden (10) führenden weiteren Abgasleitung (66) verbunden sind.

5. Abgasnachbehandlungsanordnung nach einem der vorhergehenden Ansprüche, **dadurch gekennzeichnet, dass** die Einrichtung zur Beseitigung von Stickoxiden einen Speicherkatalysator aufweist.

6. Abgasnachbehandlungsanordnung nach einem der vorhergehenden Ansprüche, **dadurch gekennzeichnet, dass** die Einrichtung zur Oxidation von Stickoxiden einen Oxidationskatalysator aufweist.

7. Abgasnachbehandlungsanordnung nach einem der vorhergehenden Ansprüche, **dadurch gekennzeichnet, dass** die zweite Einrichtung zur Oxidation einen Plasmareaktor aufweist.

8. Abgasnachbehandlungsanordnung nach einem der vorhergehenden Ansprüche, **dadurch gekennzeichnet, dass** vor zumindest einer Einrichtung zur Oxidation von Stickoxiden eine Kraftstoffzufuhreinrichtung (35) vorgesehen ist zur nachmotorischen Zufuhr von Kraftstoff in den Abgastrakt.

9. Abgasnachbehandlungsanordnung nach den Ansprüchen 2 und 8, **dadurch gekennzeichnet, dass** die Zufuhreinrichtung (35) zwischen der Abgasweiche (30) und der zumindest einen Einrichtung (20; 25) zur Oxidation angeordnet ist.

10. Abgasnachbehandlungsanordnung nach Anspruch 9, **dadurch gekennzeichnet, dass** die Zufuhreinrichtung zwischen der Abgasweiche und der zweiten Einrichtung zur Oxidation angeordnet ist.

11. Abgasnachbehandlungsanordnung nach einem der vorhergehenden Ansprüche, **dadurch gekennzeichnet, dass** ein Temperatur-Meßelement (45) vorgesehen ist zur Messung der Temperatur des Abgases.

12. Abgasnachbehandlungsanordnung nach Anspruch 11, **dadurch gekennzeichnet, dass** das Temperaturelement vor den Einrichtungen (20, 25) zur Oxidation angeordnet ist.

13. Abgasnachbehandlungsanordnung nach Anspruch 12, **dadurch gekennzeichnet, dass** das Temperaturelement vor der Abgasweiche angeordnet ist.

14. Abgasnachbehandlungsanordnung nach einem der vorhergehenden Ansprüche, **dadurch gekennzeichnet, dass** ein Stickoxid-Meßelement (40) vorgesehen ist zur Messung des Stickoxidanteils im von der Brennkraftmaschine kommenden Abgas.

15. Abgasnachbehandlungsanordnung nach Anspruch 14, **dadurch gekennzeichnet, dass** das Stickoxid-Meßelement vor den Einrichtungen (20, 25) zur Oxidation angeordnet ist.

16. Abgasnachbehandlungsanordnung nach Anspruch 15, **dadurch gekennzeichnet, dass** das Stickoxid-Meßelement vor der Abgasweiche angeordnet ist.

17. Abgasnachbehandlungsanordnung nach einem der vorhergehenden Ansprüche, **dadurch gekennzeichnet, dass** die beiden Einrichtungen zur Oxidation in einem Gehäuse integriert sind.

18. Verfahren zur Nachbehandlung von Abgasen einer Brennkraftmaschine, bei dem Stickoxide aus dem Abgas beseitigt werden, wobei die Stickoxide in einem ersten Schritt in einer Einrichtung zur Oxidation zumindest teilweise oxidiert werden, um in einem weiteren Schritt zumindest teilweise zu Stickstoff reduziert zu werden, **dadurch gekennzeichnet, dass** der erste Schritt wahlweise zumindest teilweise in einer zweiten Einrichtung zur Oxidation erfolgt, so dass für verschiedene Temperaturbereiche des Abgases unterschiedliche Oxidationspfade gewählt werden.

## Claims

1. Exhaust-gas aftertreatment arrangement having a device for removing nitrogen oxides from the exhaust gas from an internal combustion engine and a device for oxidizing nitrogen oxides arranged upstream with respect to the direction of flow of the exhaust gas, a second device (25) for oxidizing nitrogen oxides, through which the exhaust gas can flow, being provided, **characterized in that** the second device is likewise mounted upstream of the device for removing nitrogen oxides and is connected in parallel with the oxidizing device in such a manner that different oxidation paths can be selected for different exhaust-gas temperature ranges.

2. Exhaust-gas aftertreatment arrangement according to Claim 1, **characterized in that** the exhaust gas which comes from the internal combustion engine can be passed for oxidation via the oxidizing device (20) and/or via the second oxidizing device (25) as desired, by means of an exhaust-gas distributor (30).

3. Exhaust-gas aftertreatment arrangement according to Claim 2, **characterized in that** the exhaust-gas distributor has a pivotable flap, in particular an electrically or pneumatically pivotable flap.

4. Exhaust-gas aftertreatment arrangement according to one of the preceding claims, **characterized in that** the outlets of the oxidation devices are connected, via exhaust-gas lines (64, 82), to a further exhaust-gas line (66) which leads to the device for removing nitrogen oxides (10).

5. Exhaust-gas aftertreatment arrangement according to one of the preceding claims, **characterized in that** the device for removing nitrogen oxides includes a storage catalytic converter.

6. Exhaust-gas aftertreatment arrangement according to one of the preceding claims, **characterized in that** the device for oxidizing nitrogen oxides includes an oxidation catalytic converter.

7. Exhaust-gas aftertreatment arrangement according to one of the preceding claims, **characterized in that** the second oxidizing device includes a plasma reactor.

8. Exhaust-gas aftertreatment arrangement according to one of the preceding claims, **characterized in that** a fuel feed device (35) for feeding fuel into the exhaust section downstream of the engine is provided upstream of at least one device for oxidizing nitrogen oxides.

9. Exhaust-gas aftertreatment arrangement according to Claims 2 and 8, **characterized in that** the feed device (35) is arranged between the exhaust-gas distributor (30) and the at least one oxidizing device (20; 25).

10. Exhaust-gas aftertreatment arrangement according to Claim 9, **characterized in that** the feed device is arranged between the exhaust-gas distributor and the second oxidizing device.

11. Exhaust-gas aftertreatment arrangement according to one of the preceding claims, **characterized in that** there is a temperature-measuring element (45) for measuring the temperature of the exhaust gas.

12. Exhaust-gas aftertreatment arrangement according to Claim 11, **characterized in that** the temperature element is arranged upstream of the oxidizing devices (20, 25).

13. Exhaust-gas aftertreatment arrangement according to Claim 12, **characterized in that** the temperature element is arranged upstream of the exhaust-gas distributor.

14. Exhaust-gas aftertreatment arrangement according to one of the preceding claims, **characterized in that** there is a nitrogen oxide measuring element (40) for measuring the level of nitrogen oxides in the exhaust gas coming from the internal combustion engine.

15. Exhaust-gas aftertreatment arrangement according to Claim 14, **characterized in that** the nitrogen oxide measuring element is arrange upstream of the oxidizing devices (20, 25).

16. Exhaust-gas aftertreatment arrangement according to Claim 15, **characterized in that** the nitrogen oxide measuring element is arranged upstream of the exhaust-gas distributor.

17. Exhaust-gas aftertreatment arrangement according to one of the preceding claims, **characterized in that** both oxidizing devices are integrated in a single housing.

18. Process for the aftertreatment of exhaust gases from an internal combustion engine, in which nitrogen oxides are removed from the exhaust gas, the nitrogen oxides, in a first step, being at least partially oxidized in an oxidizing device, before in a further step being at least partially reduced to form nitrogen, **characterized in that** the first step is optionally carried out at least partially in a second oxidizing device, so that different oxidation paths are selected for different exhaust-gas temperature ranges.

## Revendications

1. Système de post-traitement des gaz d'échappement comprenant un dispositif d'élimination des oxydes d'azote des gaz d'échappement d'un moteur à combustion interne, et un dispositif placé en amont par rapport à la direction d'écoulement des gaz d'échappement pour oxyder des oxydes d'azote, avec un deuxième dispositif (25) pouvant être traversé par les gaz d'échappement pour oxyder des oxydes d'azote,
**caractérisé en ce que**
le deuxième dispositif est également placé en amont du dispositif d'élimination des oxydes d'azote et parallèlement au dispositif d'oxydation pour permettre un choix de différentes voies d'oxydation pour différentes plages de température des gaz d'échappement.

2. Système de post-traitement des gaz d'échappement selon la revendication 1,
**caractérisé en ce que**
les gaz d'échappement venant du moteur à combustion interne peuvent être guidés par un aiguillage de gaz d'échappement (30) au choix à travers le dispositif d'oxydation (20) et/ou le deuxième dispositif d'oxydation (25).

3. Système de post-traitement des gaz d'échappement selon la revendication 2,
**caractérisé en ce que**
l'aiguillage de gaz d'échappement présente un clapet pivotant, en particulier électrique ou pneumatique.

4. Système de post-traitement des gaz d'échappement selon l'une quelconque des revendications précédentes,
**caractérisé en ce que**
les sorties des dispositifs d'oxydation sont reliées par des conduites de gaz d'échappement (64, 82) à une autre conduite de gaz d'échappement (66) allant jusqu'au dispositif d'élimination d'oxydes d'azote (10).

5. Système de post-traitement des gaz d'échappement selon l'une quelconque des revendications précédentes,
**caractérisé en ce que**
le dispositif d'élimination d'oxydes d'azote présente un catalyseur accumulateur.

6. Système de post-traitement des gaz d'échappement selon l'une quelconque des revendications précédentes,
**caractérisé en ce que**
le dispositif d'oxydation d'oxydes d'azote présente un catalyseur d'oxydation.

7. Système de post-traitement des gaz d'échappement selon l'une quelconque des revendications précédentes,
**caractérisé en ce que**
le deuxième dispositif d'oxydation présente un réacteur à plasma.

8. Système de post-traitement des gaz d'échappement selon l'une quelconque des revendications précédentes,
**caractérisé en ce qu'**
il est prévu en amont d'au moins un dispositif d'oxydation d'oxydes d'azote un dispositif d'alimentation en carburant (35) pour alimenter le circuit de gaz d'échappement en carburant après le moteur.

9. Système de post-traitement des gaz d'échappement selon les revendications 2 et 8,
**caractérisé en ce que**
le dispositif d'alimentation (35) est disposé entre l'aiguillage de gaz d'échappement (30) et l'au moins un dispositif d'oxydation (20 ; 25).

10. Système de post-traitement des gaz d'échappement selon la revendication 9,
**caractérisé en ce que**
le dispositif d'alimentation est disposé entre l'aiguillage de gaz d'échappement et le deuxième dispositif d'oxydation.

11. Système de traitement secondaire des gaz d'échappement selon l'une quelconque des revendications précédentes,
**caractérisé par**
un élément de mesure de température (45) pour mesurer la température des gaz d'échappement.

12. Système de traitement secondaire des gaz d'échappement selon la revendication 11,
**caractérisé en ce que**
l'élément de température est en amont des dispositifs d'oxydation (20, 25).

13. Système de traitement secondaire des gaz d'échappement selon la revendication 12,
**caractérisé en ce que**
l'élément de température est en amont de l'aiguillage de gaz d'échappement.

14. Système de traitement secondaire des gaz d'échappement selon l'une quelconque des revendications précédentes,
**caractérisé en ce qu'**
un élément de mesure d'oxyde d'azote (40) mesure la proportion d'oxyde d'azote dans les gaz d'échappement venant du moteur à combustion interne.

15. Système de traitement secondaire des gaz d'échappement selon la revendication 14,
**caractérisé en ce que**
l'élément de mesure d'oxyde d'azote est en amont des dispositifs d'oxydation (20, 25).

16. Système de traitement secondaire des gaz d'échappement selon la revendication 15,
**caractérisé en ce que**
l'élément de mesure d'oxyde d'azote est en amont de l'aiguillage de gaz d'échappement.

17. Système de post-traitement des gaz d'échappement selon l'une quelconque des revendications précédentes,
**caractérisé en ce que**
les deux dispositifs d'oxydation sont intégrés dans un boîtier.

18. Procédé de post-traitement de gaz d'échappement d'un moteur à combustion interne, selon lequel on élimine des oxydes d'azote des gaz d'échappement, les oxydes d'azote étant au moins partiellement oxydés au cours d'une première étape dans un dispositif d'oxydation pour être réduits dans une étape suivante au moins partiellement en azote,
**caractérisé en ce que**
la première étape s'effectue au choix au moins partiellement dans un deuxième dispositif d'oxydation, en choisissant différentes voies d'oxydation pour différentes plages de température des gaz d'échappement.
